# EUROPEAN PATENT SPECIFICATION

(11) **EP 4 273 590 B1**
(45) Date of publication and mention of the grant of the patent: **26.11.2025**
(21) Application number: 23163010.4
(22) Date of filing: 21.03.2023
(51) Int. Cl.: G01T 7/02

(54) **DEVICE FOR DETERMINATION OF SPECIFIC ACTIVITY OF RADIOCARBON (14C)**
VORRICHTUNG ZUR BESTIMMUNG DER SPEZIFISCHEN AKTIVITÄT VON RADIOKOHLENSTOFF (14C)
DISPOSITIF DE DÉTERMINATION DE L'ACTIVITÉ SPÉCIFIQUE DU RADIOCARBONE

(30) Priority: 04.05.2022 LT 2022519
(43) Date of publication of application: 08.11.2023
(73) Proprietor: Valstybinis Moksliniu Tyrimu Institutas Fiziniu Ir Technologijos Mokslu Centras, 02300 Vilnius (LT)
(72) Inventor: REMEIKIS, Vidmantas, 02300 Vilnius (LT); PLUKIS, Arturas, 02300 Vilnius (LT); PLOTNIKOV, Artur, 02300 Vilnius (LT); EZERINSKIS, Zilvinas, 02300 Vilnius (LT); GARANKIN, Jevgenij, 02300 Vilnius (LT); BUTKUS, Laurynas, 02300 Vilnius (LT); LAGZDINA, Elena, 02300 Vilnius (LT)
(74) Representative: Draugeliene, Virgina Adolfina

(56) References cited:
- US-A- 4 187 428
- REMEIKIS VIDMANTAS ET AL: "Rapid analysis method for the determination of 14C specific activity in irradiated graphite", PLOS ONE, vol. 13, no. 1, 25 January 2018 (2018-01-25), pages e0191677, XP093076315, DOI: 10.1371/journal.pone.0191677

## Description

### Technical field

The present invention relates to the methods and devices used for the detection of activity of radioactive samples and thus it can be used in the field of evaluation of radioactive waste. A possibility of determining specific activity of radioactive samples of different origin also provides a possibility to employ new conceptual methods of radioactivity evaluation in the field of biology, medicine, and material science.

### Background art

The closest known apparatus according to the technical field is described in 2018 (https://doi.org/10.1371/journal.pone.0191677) and in 2020 (https://doi.org/10.15388/vu.thesis.75). Remeikis Vidmantas ET AL: RAPID analysis method for the determination of 14C specific activity in irradiated graphite", PLOS ONE, vol.13, no1, 25 January 2018, page e0191677. The known apparatus consists of elemental analyzer (which consists of autosampler, oxidation and reduction columns, water trap, chromatographic column, thermal conductivity detector (TCD) and β detection unit which consists of two detectors, two preamplifiers, two single-channel analyzers, a PC and a gas catcher. In the known apparatus, the two detectors are not connected together and correspondingly, the data is recorded from both detectors independently. After performing combustion of samples, the solution obtained from the catchers is mixed with liquid scintillator. Then the activity of prepared samples is detected by means of liquid scintillation counter (LSC) system. In the obtained LSC spectra, pure ¹⁴C β-activity is being recorded, no β signals from other emitters are found. According to the obtained data, the specific ¹⁴C activity is calculated in the combusted graphite sample. Disadvantages of the known apparatus are as follows:
- Narrow range of ¹⁴C specific activity measurements and high detection limit for ¹⁴C specific radioactivity because of high environmental radiation background level (which is, in turn, caused by cosmic rays, natural radionuclides and products of decay of Uranium (U) and Thorium (Th)).
- Low statistical accuracy of specific ¹⁴C activity measurement in the range of low ¹⁴C concentrations because of high flow rate of carrier gas and short time of ¹⁴C being exposed in the detection chamber.
- Sophisticated unit of CO₂ amount measurement which is based on chromatography and a thermal conductivity detector (TCD), the latter being non-selective for the CO2 gas.

Due to the mentioned disadvantages, applications of the known apparatus are somewhat limited.

### Technical problem to be solved

The present invention seeks to improve the detection limit of ¹⁴C specific activity measurement by suppressing the influence of radiation background, it also seeks to improve the accuracy of specific activity measurement by employing a freely selectable duration of CO₂ exposure in the detection chamber, it also seeks to simplify and optimize the unit of the CO₂ amount detection thus making the apparatus more practical and cost-efficient and thus broadening the field of apparatus' applications.

### Disclosure of invention

This is achieved by the proposed device for determination of specific activity of radiocarbon (¹⁴C) according to claims 1-4.

### Advantages of the invention

The proposed device allows to improve the detection limit of ¹⁴C activity by suppressing the signals from the background radioactivity, therefore, as long as the background signal is lower and detection limit is better, so the measurement range is broader and measurement precision is better. This may be particularly useful for the applications in the fields of biology, medicine and material science, for example in biological samples that make use of ¹⁴C glucose as a radioactive marker. The desirable statistical accuracy of activity measurements is achieved by selecting the duration of activity detection, independently from the parameters of the carrier gas flow. Optical CO₂ amount analyzer reduces the cost of the device and simplifies its operation and maintenance.

The invention is explained by the drawings in which the given illustrations are possible but not limiting realizations of the current invention.

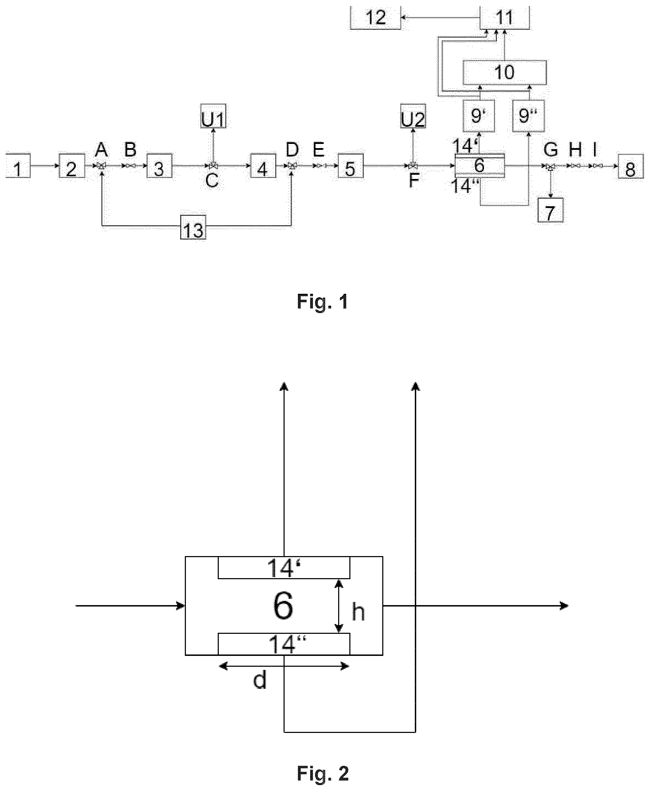

Fig. 1 - block-diagram of the device.
Fig. 2 - diagram of the β detection chamber.

According to the present invention, a device for determination of specific activity of radiocarbon (¹⁴C) comprises: a combustor 1, a water vapor and aerosol particle catcher 2, a zeolitic catcher 3, an optical CO₂ amount analyzer 4, a cryogenic CO₂ catcher 5, a chamber 6 of β-particles detection, a vacuum pump 7, a chemical CO₂ catcher 8, two single-channel analyzers of electric pulse amplitude 9' and 9", an anti-coincidence circuit 10, an electric pulse counter 11, a digital controller 12 and carrier gas balloon 13. The Chamber of β-detection 6 comprises two semiconductor detectors in the shape of disks 14' and 14", which outputs correspondingly through the two single-channel pulse amplitude analyzers 9' and 9" are connected to the anti-coincidence circuit 10. The anti-coincidence circuit 10 is configured to produce an output pulse when it receives a pulse from any one of the semiconductor detectors 14' or 14" through the respective pulse amplitude analyzers 9' or 9" and to suppress the output pulse when the anti-coincidence circuit 10 receives the pulses from both detectors 14' and 14" through the pulse amplitude analyzers 9' and 9", simultaneously.

Detailed description of at least one way of carrying out the invention where according to the invention the device is applied to determine the specific activity of ¹⁴C in the graphite samples.

Sample of radioactive graphite is placed into the combustor 1 which is maintained at the temperature of about +1000 °C in the air environment. The sample thus is converted into CO₂ (gas), NOₓ oxides (gases) and H₂O (gas). These compounds are further transferred into the system with carrier gas (N₂, Ar or He) 13 which are supplied into the system through the controlled valves A and D.

As the next step, the compounds pass through the water vapor and aerosol particle catcher 2. The catcher removes water vapor and aerosol particles while it transmits the CO₂ gas.

Further the gas mixture that contains CO₂, Rn and carrier gas (N₂, Ar, He) passes from the water vapor and aerosol particle catcher 2 into the zeolitic catcher 3 through the valves A and B for the thermal separation of radon (Rn) from CO₂ to take place. Zeolitic catcher captures at least 95% of CO₂ gas under room temperature, whereas other gases including Rn pass freely through the said catcher and are let out from the device through the open three-way valve C which is controlled by the digital controller 12. The exhaust gases are then trapped by the gas catcher U1 and utilized. After the procedure of CO₂ accumulation within the zeolitic catcher is complete, digital microcontroller 12 switches the valve C, whereas zeolitic catcher 3 is heated up to +70 °C and CO₂ gas is released and passes through the valve C into the optic analyzer of CO₂ amount 4.

Principle of operation of optic CO₂ amount analyzer relies on the strong IR-light absorption by CO₂ gas in the range of 4200-4400 nm wavelength. A non-coherent solid-state emitter of IR radiation in the range 4200-4400 nm is employed. By comparing the attenuated by CO₂ gas IR signal to the initial IR signal, absorbance of a given CO₂ sample is determined. By comparing the obtained absorbance of sample to the absorbance of known concentration of CO₂ gas and taking into account the flow rate of carrier gas, the amount of CO₂ gas in the sample is determined.

The gas stream is further directed from the analyzer 4 into the cryogenic catcher 5 which is cooled by liquid nitrogen at -196°C. There is also the controlled valve E in between analyzer 4 and catcher 5 and the said valve isolates the catcher 5 from the rest of the system, as soon as the catcher collects the CO₂ sample.

There is a three-way valve F installed downstream of the cryogenic catcher 5, the said valve isolates the cryogenic catcher 5 from the detection chamber 6 at the time of sample collection within the cryogenic catcher 5. Cryogenic catcher 5 features internal volume 8 to 10 times smaller than the β - detection chamber 6, whereas the detection chamber 6 takes the shape of a cylinder with internal dimensions h = 9 mm and d = 24 mm.

After CO₂ gas is collected within the cryogenic catcher 5, a two-way valve H is closed and cryogenic catcher 5 together with β-detection chamber 6 are vacuumed by means of the vacuum pump 7 through the three-way valve G in order to remove all residuals of carrier gas and to prepare the β-detection chamber 6 for the determination of ¹⁴C specific activity. As soon as the necessary depth of vacuum is achieved, valve G disconnects the vacuum pump from the system to avoid the surplus dead-volume of the system. The cryogenic catcher 5 is then heated to - 88 °C, the previously collected CO₂ sublimes from solid phase into the gas phase and freely diffuses between the catcher 5 and chamber 6. After the equilibrium of CO₂ concentration between catcher 5 and chamber 6 is achieved, determination of CO₂ specific activity is started, that is, electric pulses are started to be counted. Given the fact that the detection chamber (6) is 8 to 10 times bigger than the cryogenic catcher 5, at least 80% of the sample occurs within the detection chamber 6 which provides for the efficient detection. In order to achieve the desirable precision of measurement, duration of counting of pulses is continued until the moment when the counted number of pulses exceeds the pulses obtained due to the background radiation and electronic noise, that is, when the signal-to-noise ratio becomes greater than 1.

β -detection chamber 6 comprises to semiconductor detectors 14' and 14". Outputs of the detectors 14' and 14" are correspondingly connected to two single-channel pulse amplitude analyzers 9' and 9". Outputs of the said analyzers are connected to the anti-coincidence circuit 10 which aims to suppress the pulses coming from both detectors simultaneously and to transfer output signals when the pulses come from only one of the detectors 14' or 14" at a time. The output of the anti-coincidence circuit 10 is connected to the pulse counter 11. In the β-detection chamber 6, the two said detectors 14' and 14" are located opposite each other to form a geometry close to 4π. The said geometry is designed to cover the entire sphere around the gas being investigated, whereas, the radius of the sphere is equal or smaller than the mean free path of the β-particle. The 4π geometry thus enables one to record a particle and its energy independently from the direction of a particle movement. The two detectors produce the pulses that amplitude is proportional to the energy of the particle that has impacted a detector. The anti-coincidence circuit is configured so that it produces an output pulse only when the amplitude of the input pulse falls in the range from electronic noise up to the equivalent of maximum possible energy particle caused by ¹⁴C decay. In the case two pulses come from both detectors simultaneously, a ban signal is formed for the pulse counter 11 and therefore the counter 11 will omit the given pulses. This ensures that only the pulses generated by β-decay of the sample are counted and the pulses coming from the external sources (like, from the cosmic rays) are omitted. Data treatment and control of the device is performed by the digital controller 12.

Chemical CO₂ catcher 8 containing 3 M NaOH solution is installed downstream of the β-detector chamber 6. There is also a check-valve (I) installed immediately before the chemical catcher 8. The check-valve (I) prevents chemical reagents from flowing back from the chemical catcher into the system. The CO₂ sample collected within a chemical catcher can further be used for radioactivity analysis by liquid scintillation counting (LSC) technique and for evaluation of the CO₂ mass as well.

## Claims

1. A device for determination of specific activity of radiocarbon (¹⁴C) comprising a combustor (1) which outlet is linked to a water vapor and aerosol particle catcher (2), a chemical CO₂ catcher (8), a balloon (13) designed to hold a carrier gas and supply it through controlled valves into the device, wherein the carrier gas is selected from a group of N₂ , Ar or He, the device further comprising a controller (12) to perform data treatment and to control the device operation and a β - particle detection system with a chamber (6), the chamber comprising two semiconductor detectors (14', 14") which arrangement is close to the 4π - geometry and which is configured to produce electric pulses proportional to an energy of the detected β particles, the energy of produced electric pulses being in a range from an equivalent of an electronic noise to a maximum possible energy of β particles emitted during radioactive decay of ¹⁴C, wherein the two semiconductor detectors (14', 14") of the β-particle detection chamber (6) are connected correspondingly to two pulse amplitude single-channel analyzers (9', 9"), **characterized in that** the device is provided with:
- a zeolitic CO₂ catcher (3) which inlet is linked to an outlet of the water vapor and aerosol particle catcher (2) through a controlled valve B, wherein outlet of said CO₂ catcher (3) is linked to an optical CO₂ amount analyzer (4) through a first outlet of a controlled valve C, wherein a second outlet of the valve C is intended to remove the discharged gases from the device,
- a cryogenic CO₂ catcher (5) which inlet is linked to an outlet of the optical CO₂ amount analyzer (4) through controlled valves, while an outlet of said catcher (5) is linked to the chamber (6) of the β-particle detection system through a first outlet of a valve (F), wherein a second outlet of the valve (F) is intended to remove the discharged gases from the device, wherein the outlets of the two pulse amplitude single-channel analyzers (9',9") are connected to an anti-coincidence electronic circuit (10), an output of the anti-coincidence circuit (10) is connected to a pulse counter (11) which is configured to count the pulses generated by β particles, wherein the number of counted pulses is used to evaluate the specific activity of ¹⁴C, wherein the chamber (6) of the β-particle detection system is linked to the chemical CO₂ catcher (8) and to a vacuum pump (7) through controlled valves.

2. The device according to claim 1, **characterized in that** the optical CO₂ amount analyzer (4) is configured to measure the light absorption in the gas stream, said light absorption, being dependent on CO₂ concentration data, is time integrated, where the value of the integral is proportional to an amount of CO₂ that has passed through the device over the integrated time period.

3. The device according to claim 1 or 2, **characterized in that** the geometry of the chamber (6) of β-particle detection system is cylindrical and the detectors are disc-shaped wherein the distance h between the two semiconductor detectors (14', 14") is about 2.5 times smaller than their diameter d.

4. A system for the determination of specific activity of radiocarbon ¹⁴C comprising a device according to any one of claims 1 - 3.

## Patentansprüche

1. Vorrichtung zur Bestimmung der spezifischen Aktivität von Radiokohlenstoff (¹⁴C), umfassend eine Brennkammer (1), deren Auslass mit einem Wasserdampf- und Aerosolpartikelfänger (2) verknüpft ist, einen chemischen CO₂-Fänger (8), einen Ballon (13), der dazu gestaltet ist, ein Trägergas zu halten und es durch gesteuerte Ventile in die Vorrichtung zu liefern, wobei das Trägergas aus einer Gruppe von N₂, Ar oder He ausgewählt ist, wobei die Vorrichtung ferner eine Steuerung (12), um Datenbehandlung durchzuführen und um den Vorrichtungsbetrieb zu steuern, und ein β-Partikeldetektionssystem mit einer Kammer (6) umfasst, wobei die Kammer zwei Halbleiterdetektoren (14', 14") umfasst, deren Anordnung nahe der 4π-Geometrie ist und die dazu konfiguriert ist, elektrische Impulse proportional zu einer Energie der detektierten β-Partikel zu produzieren, wobei die Energie an produzierten elektrischen Impulsen in einer Spanne von einem Äquivalent eines elektronischen Rauschens zu einer maximal möglichen Energie von β-Partikeln, die während radioaktiven Zerfalls von ¹⁴C emittiert werden, ist, wobei die zwei Halbleiterdetektoren (14', 14") der β-Partikeldetektionskammer (6) entsprechend mit zwei Impulsamplituden-Einzelkanalanalysatoren (9', 9") verbunden sind, **dadurch gekennzeichnet, dass** die Vorrichtung mit Folgendem bereitgestellt ist:
- einem zeolithischen CO₂-Fänger (3), dessen Einlass mit einem Auslass des Wasserdampf- und Aerosolpartikelfängers (2) durch ein gesteuertes Ventil B verknüpft ist, wobei der Auslass des CO₂-Fängers (3) mit einem optischen CO₂-Mengenanalysator (4) durch einen ersten Auslass eines gesteuerten Ventils C verknüpft ist, wobei ein zweiter Auslass des Ventils C dazu gedacht ist, die abgegebenen Gase aus der Vorrichtung zu entfernen,
- einem kryogenen CO₂-Fänger (5), dessen Einlass mit einem Auslass des optischen CO₂-Mengenanalysators (4) durch gesteuerte Ventile verknüpft ist, während ein Auslass des Fängers (5) mit der Kammer (6) des β-Partikeldetektionssystems durch einen ersten Auslass eines Ventils (F) verknüpft ist, wobei ein zweiter Auslass des Ventils (F) dazu gedacht ist, die abgegebenen Gase aus der Vorrichtung zu entfernen,
wobei die Auslässe der zwei Impulsamplituden-Einzelkanalanalysatoren (9', 9") mit einer elektronischen Antikoinzidenzschaltung (10) verbunden sind,
ein Auslass der Antikoinzidenzschaltung (10) mit einem Impulszähler (11) verbunden ist, der dazu konfiguriert ist, die Impulse zu zählen, die durch β-Partikel erzeugt werden, wobei die Anzahl an gezählten Impulsen verwendet wird, um die spezifische Aktivität von ¹⁴C zu evaluieren, wobei die Kammer (6) des β-Partikeldetektionssystems mit dem chemischen CO₂-Fänger (8) und mit einer Vakuumpumpe (7) durch gesteuerte Ventile verknüpft ist.

2. Vorrichtung nach Anspruch 1, **dadurch gekennzeichnet, dass** der optische CO₂-Mengenanalysator (4) dazu konfiguriert ist, die Lichtabsorption in dem Gasstrom zu messen, wobei die Lichtabsorption, die von CO₂-Konzentrationsdaten abhängig ist, zeitintegriert ist, wobei der Wert des Integrals proportional zu einer Menge an CO₂ ist, die durch die Vorrichtung über den integrierten Zeitraum gelaufen ist.

3. Vorrichtung nach Anspruch 1 oder 2, **dadurch gekennzeichnet, dass** die Geometrie der Kammer (6) des β-Partikeldetektionssystems zylindrisch ist und die Detektoren scheibenförmig sind, wobei der Abstand h zwischen den zwei Halbleiterdetektoren (14', 14") etwa 2,5 mal kleiner als ihr Durchmesser d ist.

4. System für die Bestimmung der spezifischen Aktivität von Radiokohlenstoff ¹⁴C, umfassend eine Vorrichtung nach einem der Ansprüche 1-3.

## Revendications

1. Dispositif de détermination de l'activité spécifique du radiocarbone (¹⁴C) comprenant un combusteur (1) dont la sortie est reliée à un capteur de vapeur d'eau et de particules d'aérosol (2), un capteur chimique de CO₂ (8), un ballon (13) conçu pour contenir un gaz porteur et le délivrer à travers des vannes commandées dans le dispositif, dans lequel le gaz porteur est sélectionné dans un groupe de N₂, Ar ou He, le dispositif comprenant en outre un dispositif de commande (12) pour effectuer un traitement de données et pour commander le fonctionnement du dispositif et un système de détection de particules β avec une chambre (6), la chambre comprenant deux détecteurs à semi-conducteurs (14', 14")
lequel agencement est proche de la géométrie 4π et est configuré pour produire des impulsions électriques proportionnelles à une énergie des particules β détectées, l'énergie des impulsions électriques produites étant dans une plage allant d'un équivalent d'un bruit électronique à une énergie maximale possible des particules β émises pendant la désintégration radioactive du ¹⁴C, dans lequel les deux détecteurs à semi-conducteurs (14', 14") de la chambre de détection de particules β (6) sont connectés de manière correspondante à deux analyseurs monocanaux d'amplitude d'impulsion (9', 9"), **caractérisé en ce que** le dispositif est muni de :
- un capteur zéolithique de CO₂ (3), dont l'entrée est reliée à une sortie du capteur de vapeur d'eau et de particules d'aérosol (2) via une vanne commandée B, dans lequel la sortie dudit capteur de CO₂ (3) est reliée à un analyseur optique de quantité de CO₂ (4) via une première sortie d'une vanne commandée C, dans lequel une seconde sortie de la vanne C est destinée à éliminer les gaz évacués du dispositif,
- un capteur cryogénique de CO₂ (5) dont l'entrée est reliée à une sortie de l'analyseur optique de quantité de CO₂ (4) via des vannes commandées, tandis qu'une sortie dudit capteur (5) est reliée à la chambre (6) du système de détection de particules β via une première sortie d'une vanne (F), dans lequel une seconde sortie de la vanne (F) est destinée à éliminer les gaz évacués du dispositif,
dans lequel les sorties des deux analyseurs monocanaux d'amplitude d'impulsion (9', 9") sont connectées à un circuit électronique anti-coïncidence (10),
une sortie du circuit anti-coïncidence (10) est connectée à un compteur d'impulsions (11) qui est configuré pour compter les impulsions générées par les particules B, dans lequel le nombre d'impulsions comptées est utilisé pour évaluer l'activité spécifique du ¹⁴C, dans lequel la chambre (6) du système de détection de particules β est reliée au capteur chimique de CO₂ (8) et à une pompe à vide (7) via des vannes commandées.

2. Dispositif selon la revendication 1, **caractérisé en ce que** l'analyseur optique de quantité de CO₂ (4) est configuré pour mesurer l'absorption de lumière dans le flux de gaz, ladite absorption de lumière, étant dépendante des données de concentration de CO₂, est intégrée dans le temps, où la valeur de l'intégrale est proportionnelle à une quantité de CO₂ qui a traversé le dispositif sur la période de temps intégrée.

3. Dispositif selon la revendication 1 ou 2, **caractérisé en ce que** la géométrie de la chambre (6) du système de détection de particules β est cylindrique et les détecteurs sont en forme de disque, dans lequel la distance h entre les deux détecteurs à semi-conducteurs (14', 14") est environ 2,5 fois plus petite que leur diamètre d.

4. Système de détermination de l'activité spécifique du radiocarbone ¹⁴C comprenant un dispositif selon l'une quelconque des revendications 1 à 3.
